# EUROPEAN PATENT SPECIFICATION

(11) **EP 3 160 652 B1**
(45) Date of publication and mention of the grant of the patent: **28.07.2021**
(21) Application number: 15734562.0
(22) Date of filing: 26.06.2015
(51) Int. Cl.: B04B 5/04, B04B 11/04, G01N 35/04

(54) **CENTRIFUGE**
ZENTRIFUGE
CENTRIFUGEUSE

(30) Priority: 27.06.2014 DK 201470397
(43) Date of publication of application: 03.05.2017
(73) Proprietor: HC-CACS ApS, 7080 Børkop (DK)
(72) Inventor: BRANDSLUND, Ivan, DK-7100 Vejle (DK); HOLM, Henrik, DK-7080 Børkop (DK)
(74) Representative: Plougmann Vingtoft a/s
(86) International application number: PCT/DK2015/050188
(87) International publication number: WO 2015/197080

(56) References cited:
- IT-A1- TO20 110 009
- JP-A- H06 182 257
- None

## Description

### Field of the invention

The present invention relates to an improved centrifuge for high-speed centrifugation of, for example, test tubes, in particular test tubes containing blood samples.

### Background of the invention

In most laboratories, centrifugation takes place in a batch process whereby a centrifuge is loaded with a batch of sample tubes and run up to speed. After a requisite period of steady state spinning, operation is stopped. Once stopped, the centrifuge may be unloaded and a new batch loaded. Such systems are not very versatile and do not allow small batches to be handled on an urgent basis. An example of such a centrifuge is given in US 3,635,394. This publication shows a centrifuge, wherein the rotor must be decelerated or halted in order to load further samples or to unload centrifuged samples.

Disclosed in WO2013/176541 is a centrifuge that allows continuous operation and where a shaft and a working section are at first rotated at a constant speed suitable for centrifugation. Then a carriage, for example containing test tubes with blood samples, is attached to an acceleration member. Subsequently, an auxiliary drive arrangement is used for accelerating the acceleration member to match the rotational speed of the working section after which the acceleration member is coupled to the working section via a loading end thereof. The carriage is then transferred from the acceleration member to the working section for being centrifuged, after which the acceleration member is decoupled from the working section. In order to unload the carriage from the working section an auxiliary drive arrangement is used for accelerating the deceleration member to match the rotational speed of the working section. Then the centrifuged carriage is transferred from the working section to the deceleration member via its unloading end, after which the deceleration member is decoupled from the working section. The deceleration member with the centrifuged carriage is then decelerated so that the carriage can be taken off. All in all, this known centrifuge is of complicated structure and is not very versatile.

Disclosed in ITTO20110009 is a laboratory centrifuge with a system for a continuous loading and unloading of containers, preferably laboratory specimens or small bottles, with a rotating rotor, characterized in that it is adapted to load and unload the containers without stopping the rotation of the rotor; and in that it is composed of a device for selecting and extracting the containers, adapted to select the cells to be loaded or unloaded, and of a robotic arm equipped with small motored arms adapted to load and re-load the containers into cradles, in order to deposit them into a deposit station.

It would be desirable to provide a centrifuge that is versatile and which can easily be adapted for handling of both large and small batches of samples. Preferably, the centrifuge should also be simple to manufacture and operate.

### Summary of the invention

The present invention provides such a highly versatile centrifuge, suitable for handling large batches of test tubes that are loaded onto a spinning turntable and then unloaded while the turntable is still spinning, as well as small size batches that are loaded while the test tubes of the large size batch are being centrifuged.

Specifically, the present centrifuge comprises a turntable according to claim 1.

It is contemplated that a large size batch of test tubes, already being centrifuged when the aforementioned specified test tube is loaded, may be unloaded by the first test tube transfer mechanism, while the specified test tube is being centrifuged, and that a next large size batch of test tubes may then be loaded using, against, the first test tube transfer mechanism. After loading the next large size batch, or when the centrifuging period ends, the specified test tube is then unloaded using the first test tube transfer mechanism.

### Detailed description of the invention

An embodiment of a continuously operable centrifuge for high-speed centrifugation, according to the invention, will by way of non-limiting example be described in detail with reference to the accompanying drawings.

In the drawings:
Fig. 1 shows a portion of a centrifuge according to the invention in perspective view, seen from above and in the process of loading a specified test tube,
Fig. 2 shows, seen from below, an embodiment of the centrifuge with the turntable and the first test tube transfer mechanism in a coupled state, in a partially sectional view,
Fig. 3 shows the centrifuge of fig. 1, seen from above, in the process of accelerating the first test tube transfer mechanism,
Fig. 4 shows the centrifuge of fig. 1, seen from above and further in the process of positioning the transferring holder,
Fig. 5 shows a detail of the centrifuge of fig. 4, seen from above and further in the process of transferring the test tube,
Fig. 6 shows the centrifuge of fig. 1, seen from below in the process of returning a test tube from the turntable, and
Fig. 7 shows a detail of the centrifuge of fig. 6, seen from below and further in the process of returning a test tube.
Figs. 8-10b illustrate a further embodiment of the invention. This embodiment includes an alternative to the first test tube transfer mechanism and includes an alternative to the construction including the second ejectors.

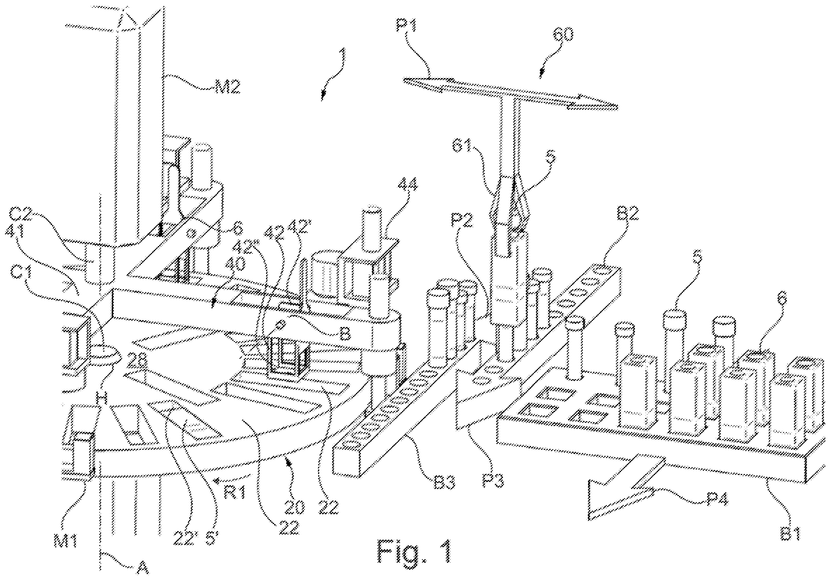

Fig. 1 is a schematic illustration showing a portion of an embodiment of the centrifuge according to the invention, generally designated reference numeral 1. The centrifuge 1 is suitable for centrifugation of test tubes 5, exemplified in the drawings as being elongated and capped test tubes containing eg. blood samples or alimentary products for investigation or processing.

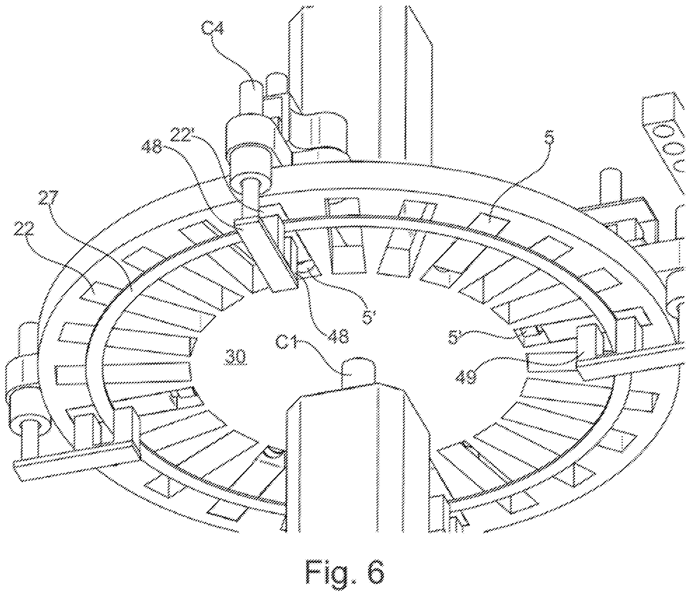

The centrifuge 1 includes a turntable 20 centrally mounted to rotate about an axis A and having a first side 28 and an opposite second side 30 (seen in fig. 6). Normally, the centrifuge will be installed such that the axis A is vertical with the first side 28 facing upwards, leaving a working space above the first side 28. The turntable 20 has a central hub H by means of which it is mounted to a central axle C1, and activation of a motor M1 brings about a rotation about the axis A with a selected speed R1 of the turntable 20.

The term "turntable" as used herein encompasses i.e. rotatable disc-like structures as shown in the drawings; however, the skilled person will be understand this term to also encompass structures that have an irregular periphery and structures that are not flat, including structures with spokes radiating from the hub H as well as other structures that in general allow for operation of the centrifuge 1 in the described manner. Preferably, and for the reasons explained further below, the turntable 20 is mounted to provide a working space also below the second, lower side 30. However, such a working space may not be required.

The turntable 20 is formed with a plurality of test tube holders 22, each configured for holding a corresponding test tube 5' in a centrifuging position, i.e. in a position where centrifugation of the test tube contents takes place. As shown, the turntable 20 may have a plurality of groups of test tube holders 22 located at different radial distances from the axis A to provide for different centrifugal forces on the test tubes 5, depending on where the test tubes 5 are positioned.

By way of example, during centrifugation with the test tubes in the centrifuging position a constant speed of rotation R1 of the turntable 20 may be 3,000 RPM at which speed the centrifuging time may be in the order of 5-20 minutes or more, adaptable as needed.

When being in the centrifuging position the test tubes 5' are normally oriented radially outwards from the axis A, lying in a horizontal position perpendicular to the axis A, as shown in fig. 1, or in a near horizontal position at a small angle with the axis A of between 90° and 80°. In the shown embodiment, the test tube holders 22 are formed as elongated rectangular slits 22 open at the first side 28 and at the second side 30. Preferably, a stop 27 as exemplified by the ribbon 27 shown in fig. 6 is provided to restrict movement of the test tubes 5 once received in the slits 22. The slits 22 may, seen from above, be rectangular as shown, or trapezoidal, with a shape complementary to the test tubes 5 or, as in the shown embodiment, to a respective hollow casing 6 or adapter into which each test tube 5 is inserted before transfer to the centrifuge 1. Use of a set of such casings 6 may be appropriate where the centrifuge 1 is to be used for centrifuging test tubes 5 of different dimensions in that the outer dimensions of the casings 6 are selected to fit the slits 22 while the inside of the hollow casings 6 is sized to receive a given size of test tube 5. Test tubes 5 of different sizes are often found in laboratories at hospitals or similar institutions so use of such an adapter or casing 6 allows the centrifuge 1 to be used in connection with a diversity of test tubes 5, provided a set of casings 6 having different internal size is available.

The centrifuge 1 also includes a rotatable first test tube transfer mechanism generally designated reference numeral 40 and configured for supporting a number of test tubes 5, each received in a casing 6 as the case may be, and for transferring a given test tube 5' to a designated test tube holder 22' of the turntable 20. The first test tube transfer mechanism 40 is illustrated in an embodiment with four arms or spokes 41 radiating outwards from an axle C2 defining an axis of rotation of the transfer mechanism 40 coincident with the aforementioned axis A; preferably, the arms 41 project in opposite directions from the axle C2 to ensure proper balancing.

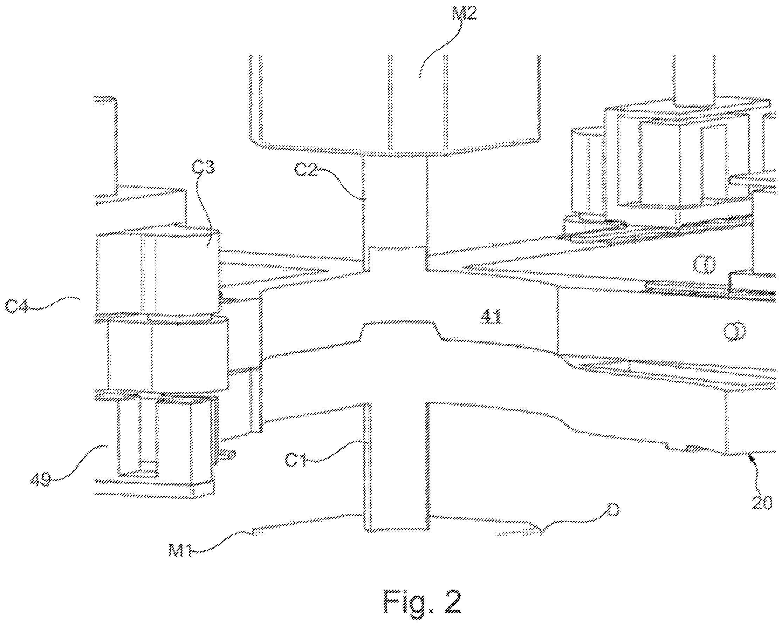

Preferably, as shown in fig. 2, the centrifuge 1 also includes a drive D for moving the first test tube transfer mechanism 40 and/or the turntable 2 along the axis A so as to temporarily reduce the distance along the axis A between the turntable 20 and the first test tube transfer mechanism 40. In the shown example, the drive D acts solely to move the turntable 20 in the up and down direction along axis A. The hub H of the turntable 20 and the first test tube transfer mechanism 40 may be configured with complementary surface portions engaging each other through action of the drive D when the aforementioned test tube transfer takes place, to provide a degree of interlocking to stabilize the axles C1 and C2 as the transferring of test tubes takes place.

Operation of the test tube transfer mechanism 40 will be explained further below; at this point it should be noted that transfer of test tubes 5 between the first test tube transfer mechanism 40 and the turntable 20 takes places when the first test tube transfer mechanism 40, driven by a motor M2 coupled to the axle C2, is rotating about the axis A in the same direction and at the same speed of rotation as the speed of rotation R1 of the turntable 20. Also, transfer of test tubes 5 between all the arms 41 and the turntable 20 preferably takes place simultaneously. The driving motor M2 is of a type generally available, which will allow for quick acceleration and deceleration of the first test tube transfer mechanism 40; motors are generally available that may accelerate the first test tube mechanism 40 to a speed of rotation R1 in the order of, by way of example, 3,000 RPM in a few seconds or even milliseconds.

Shown in the fig. 1 is also a second test tube transfer mechanism 60 located for transferring a test tube 5 to the first test tube transfer mechanism 40 when the latter is in a non-rotating, stationary state, for subsequent transfer of the test tube 5 to a test tube holder 22 of the turntable 20 by means of the first test tube transfer mechanism 40. Generally, the second test tube transfer mechanism 60 is operated to transfer test tubes 5 belonging to a relatively large size batch B1 to the first test tube transfer mechanism 40 by means of a gripper device 61 which is configured to engage individual test tubes 5 or casings 6 and to move along direction P1 to the first test tube transfer mechanism 40.

The second test tube transfer mechanism 60 is also configured to transfer test tubes 5/casings 6 belonging to smaller batches B2, B3 to the first test tube transfer mechanism 40 while the test tubes 5 of the large size batch B1 are being centrifuged. This is relevant where there is a sudden, urgent need for testing samples held in test tubes of such smaller batches, i.e. where there is no time to wait for completion of the centrifugation currently ongoing. For this purpose, individual fixtures for test tubes of one or more such small batches B2, B3 are arranged to be movable into a position within the workspace of the second test tube transfer mechanism 60, such as along directions illustrated by arrows P2, P3.

Fig. 1 shows the presently preferred embodiment of the first test tube transfer mechanism 40 as including near the end of each arm 41 a cage-like transferring holder 42 with an open top 42', for top side receiving and temporarily supporting a test tube 5, shown received in a casing 6, to be transferred further on to a test tube holder 22 of the turntable 20. The transferring holder 42 is movable in being pivotable about a turning axis B oriented perpendicular to the axis A of rotation of the turntable 20, and has an open first side 42" to allow for sideways discharge of the test tube 5. A test tube 5/casing 6 is inserted into the transferring holder 42 by release of the gripper device 61 when in a position above the open top 42'.

From the foregoing it will be understood that if, by way of example, a large size batch B1 includes twenty test tubes 5 the gripper device 61 may move back and forth at high speed twenty times, with a transferring holder 42 of the first test tube transfer mechanism 40 each time receiving a corresponding test tube 5 for subsequent transferring of the test tube 5 to the turntable 20. Conveniently, where the first test tube transfer mechanism 40 has several arms 41, as in the shown embodiment, it will rotate stepwise to align each arm 41 with the second test tube transfer mechanism 60.

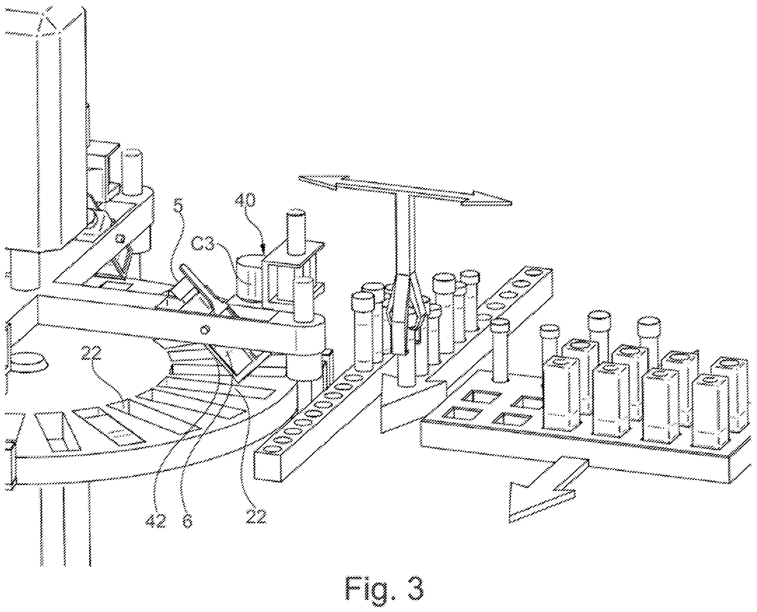

In fig. 3, the transferring holders 42 at each end of the four arms 41 have received a test tube 5 by four consecutive back and forth movements of the gripper device 61 in direction P1. Alternatively, a number of dummies may be loaded for balancing purposes when a small batch B2 of only one test tube 5 is to be transferred to the turntable 20 already in the process of centrifuging a large size batch B1.

The first test tube transfer mechanism 40 with the arms 41 has been set in motion by motor M2 to rotate about axis A, thereby setting up a centrifugal force on the transferring holders 42. By the turning axis B being located offset in relation to the centre of gravity of the test tube 5/casing 6 the centrifugal force brings about a rotation of the transferring holder 42 about the axis B, into a generally horizontal position.

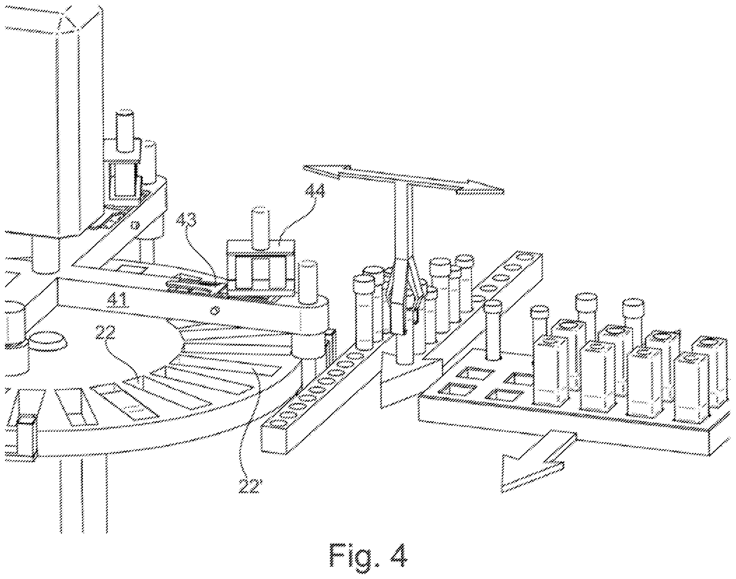

Fig. 3 shows the transferring holder 42 turning towards the horizontal position while in fig. 4 the transferring holder 42 has reached the horizontal position, stabilized by an extension 43 bearing against the arm 41. Securing elements of the transferring holder 42 preferably temporarily secure the test tube 5/casing 6 within the transferring holder 42. The securing elements may be clamps defining the first open side 42", now facing downwards, of the transferring holder 42 and/or magnets on the transferring holder 42 cooperating with magnets included in the test tube 5/casing 6.

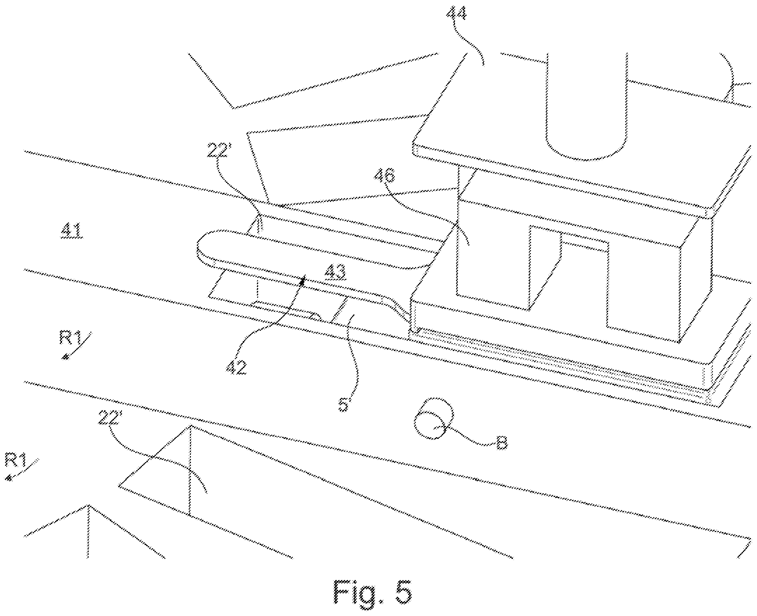

As seen best in figs. 4 and 5, the centrifuge 1 includes a first ejector 44, which is activated for ejecting a test tube 5 from the first test tube transfer mechanism 40 when the test tube 5 has been brought into proper alignment with an assigned test tube holder 22 of the turntable 20, both spinning at centrifugation speed R1. The first ejector 44 is rotatably supported at the end of the respective arm 41 by an axle C3 (see fig. 3) so as to be rotatable relative to the arm 41 into a position above a corresponding transferring holder 42; in this position the transferring holder 42 is held in place by contact between the first ejector 44 and the extension 43.

More particularly, for ejection the first ejector 44 is rotated into a correct position above the transferring holder 42, and a piston-like movable element 46 of the first ejector 44 is activated to apply a force onto the casing 6/test tube 5 for discharging the latter from the transferring holder 42 by releasing the aforementioned securing elements or by overcoming the engagement thereof with the test tube 5/casing 6. With the transferring holder 42 being located closely above the turntable 20 the test tube 5 will fall from the arm 41 by gravity into the test tube holder 22. The movable element 46 may have magnetic properties for temporarily holding the test tube 5/casing 6.

From the foregoing it will be understood that the aforementioned ejection is only initiated once the motor M2 has accelerated the first test tube transfer mechanism 40 to a speed R1 of rotation corresponding to that of the turntable 20. Preferably, the aforementioned movement of the first test tube transfer mechanism 40 and/or the turntable 2 along the axis A to reduce the distance along the axis A between the turntable 20 and the first test tube transfer mechanism 40 has also been initiated or completed, cf. fig. 2.

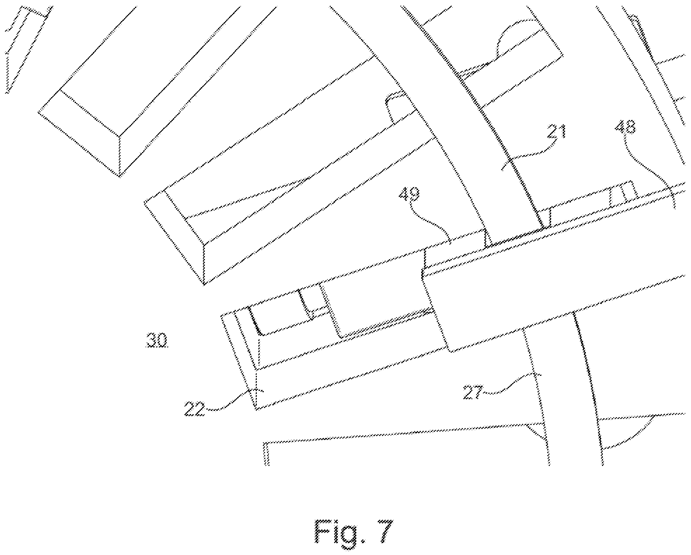

Moreover, before ejection an alignment of the to-be-ejected test tube 5/casing 6 with an available or preselected empty test tube holder 22 must have occurred. The skilled person will know how to bring about such an alignment, using a suitable processor or computer. Such an alignment may by way of example be achieved by performing a brief acceleration or deceleration of the first test tube transfer mechanism 40, i.e. briefly increasing or decreasing its speed of rotation, until alignment of specified test tubes 5' with selected test tube holders 22' is detected by appropriate detectors. At this time, ejection of a test tube 5 brings the test tube 5 to fall by gravity into the selected test tube holder 22, with its downward movement arrested by the stop 27 shown in figs. 6 and 7.

Preferably, as seen best in figs. 6 and 7, the centrifuge 1 also includes a number of second ejectors 48, each for ejecting a test tube 5 from a corresponding test tube holder 22 of the turntable 20 after completion of required centrifuging and after proper alignment of the arm 41. By the second ejectors 48 the test tubes 5 are returned to the first test tube transfer mechanism 40 when the latter has been once again moved adjacent the turntable 20 by action of the drive D. In fig. 7 the second ejector 48 is shown as including a movable element 49, and the first test tube transfer mechanism 40 is configured for receiving and supporting the ejected test tube 5 by the movable element 49 being operative to move the test tube 5 in an upward direction generally parallel with the axis A.

As shown in fig. 6, the first test tube transfer mechanism 40 conveniently may include such a second ejector 48 structured integral with each first ejector 44 and mounted to turn by axle C4 on each arm 41, between a position next to the turntable 20 and a position facing the second side 30 thereof. Conveniently, the movable element 49 acts directly on the test tube 5/casing 6 to force it upwards into the aligned transferring holder 42 and into engagement with the securing elements thereof, be it snap-engaging clamps or magnets located in connection with the transferring holder 42. The movable element 49 is then retracted and the second ejector 48 returned to its starting position by rotation through axle C4, allowing the drive D to distance the turntable 20 from the arm 41 of the first test tube transfer mechanism 40. The first test tube transfer mechanism 40 is then halted in position aligned with the second test tube transfer mechanism 60, allowing the gripper device 61 to move in position to grip around the test tube 5/casing 6 and return it to the batch, be it batch B1 or the smaller batch B2, B3.

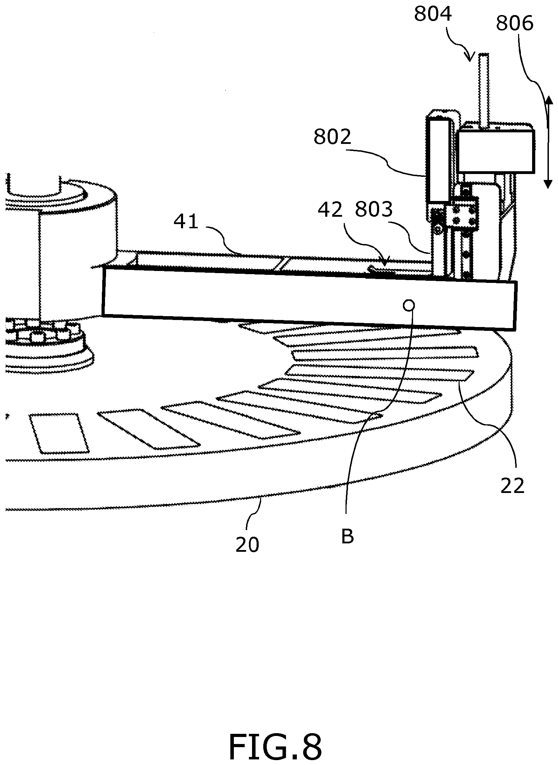

Figures 8-10b illustrate a further embodiment of the invention. This embodiment includes an alternative to the first test tube transfer mechanism 40 and includes an alternative to the construction including the second ejectors 48. The alternative may be even more preferred, e.g. due to its further simplicity, in terms of the movements and actions carried out. Further, the alternative may e.g. be seen to enable a somewhat lower and/or practically constant air resistance when compared the test tube transfer mechanism 40 and the construction including the second ejectors 48.

Fig. 8 is a perspective view of at least part of the turntable 20 and of the arm 41 in a situation where the casing with the test tube has their longitudinal direction perpendicular or substantially perpendicular with the axis A by a turn around the axis B as previously described herein. There is illustrated a gripper 802 with gripper arms, of which only one gripper arm 803 can be seen in this figure. The gripper is attached to the arm 41. The gripper 802 is moveable in the moving direction 806 by the moving device 804, such as a linear actuator, so as to enable transfer of the test tube to and/or from the turntable 20 using the gripper and the moving device. The gripper and moving device may be provided as one single combined gripping and moving device. The moving direction 806 is parallel with or substantially parallel with the axis A. A benefit from such direction 806 may be seen to be that a distance from the axis A, at which a center of mass of an arrangement for transferring test tubes to and/or from the turntable is unchanged or substantially unchanged, and i.e. no change is foreseen with the alternative arrangement for transfer according to figures 8-10b.

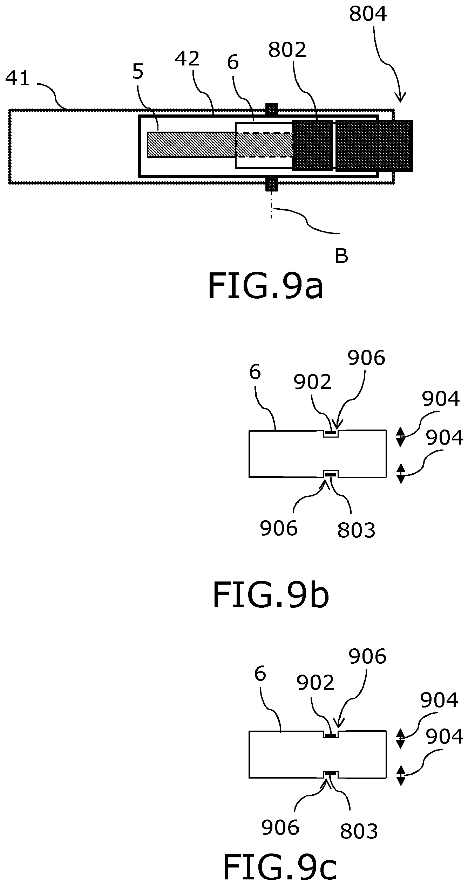

Fig. 9a is an illustration of a top-view of the arm 41 of the embodiment in figure 8. The test tube 5 is shown in the casing 6 and in the transferring holder 42 in the situation described for figure 8. For simplicity, the turntable 20 etc. is not shown in figure 9a.

Fig. 9b illustrates a top-view of the casing 6 in a situation where the gripper arms 803, 902 are in a disengaged position, i.e. where the gripper arms has been moved in a linear movement in a direction towards and into a recess 906 formed for operably engageability with the gripper in the casing 6, but where the gripper has not yet been activated/engaged in the engagement and disengagement direction 904. The tube 5, the arm 41 etc. are not shown in figure 9b and 9c.

Fig. 9c illustrates a top-view of the grippers 803, 902 when they have been activated so as to grip the casing 6 and thus when they are in a position so as to enable transfer of the casing to and/or from a slit 22 in the turntable 20 by a movement of the gripper device 802 using the moving device 804.

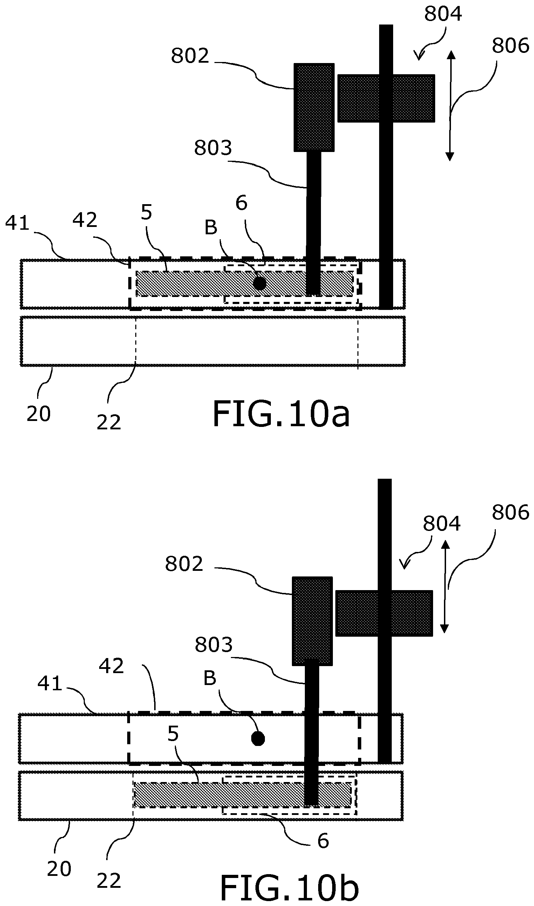

Fig. 10a is a side view illustrating a situation when the casing 6 has been gripped by the gripper 802 and is ready for transfer to the turntable 20.

Fig. 10b is a side view illustrating a situation where the casing 6 has been transferred to one of the slits 22 of the turntable 20. As the overall idea and manner of using the transferring holder 42 etc. is the same or substantially the same as for the embodiments with the first test tube transfer mechanism 40 and the second ejectors 48, the transferring holder 42 remains in the arm 41.

It is to be understood that as an alternative to, or in addition to, the gripper arms 803, 902, the gripper 802 may be equipped with other or further means, such as means using suction or vacuum, to engage and/or to hold the casing and/or to engage and/or to hold the test tube during transfer to and/or from the turntable. A benefit of the gripper and the moving device is that a transfer is provided that enables the casing with the test tube to be transferred in a controlled movement during the complete transfer.

The centrifuge also includes a control device (not shown) configured for positioning and maintaining the first test tube transfer mechanism 40 rotating about the axis A aligned with a predetermined test tube holder 22' of the turntable 20 simultaneously rotating about the axis A, the control device being configured for activating the first test tube transfer mechanism 40 for transferring a test tube 5 supported by the first test tube transfer mechanism 40 to the predetermined test tube holder 22' of the turntable 20 after the positioning.

The summarise, operation of the centrifuge 1 preferably is as follows:
a) the turntable 20 is rotated at a first speed R1 about the axis A,
b) the first test tube transfer mechanism 40 is maintained stationary while receiving test tubes 5,
c) the first test tube transfer mechanism 40 is rotated with test tubes 5, at the first speed R1 about the axis A, in the same direction as the turntable 20,
d) before or after step c) the test tubes 5 are aligned with selected test tube holders 22, such as by a brief acceleration or deceleration of the rotating turntable 20, and
e) the first test tube transfer mechanism 40 is activated to transfer the test tubes 5 to the selected test tube holders 22, such as by gravity as described above.

As a next step the first test tube transfer mechanism 40 is decelerated to a stationary position, following which steps a) - e) may be repeated.

When a specified test tube 5' has been centrifuged for the required period of time the first test tube transfer mechanism 40 is once again accelerated to rotate essentially at the previous speed or velocity R1 about the axis A, after which the first test tube transfer mechanism 40 is aligned, by a brief acceleration or deceleration of the test tube transfer mechanism 40, with the specified test tube 5, and the second ejector 48 of the first test tube transfer mechanism 40 is then activated to return the specified test tube 5 to the first test tube transfer mechanism 40.

As seen, the turntable 20 is mounted to provide a working space also below the second side 30, for operation of the second ejector 48. However, such a working space may not be necessary in cases where the second ejector 48 is integrated with the first ejector 44; by way of example, the first ejector 44 may include a magnet operable to withdraw a test tube 5 from a corresponding test tube holder 22' of the turntable 20.

It is noted that the upper and lower movable elements 49 and 46 may be controlled to contact the test tube 5 from above and below when transferring test tubes 5 to, as well from, the turntable 20, to provide an increased support and guiding. It is also noted that ribbon 27 may be magnetic for fixing the test tubes 5 in place.

## Claims

1. A centrifuge (1) for centrifugation of test tubes (5), in particular for high-speed centrifugation of elongated test tubes containing samples, said centrifuge comprising:
- a turntable (20) centrally mounted for rotation about an axis (A) and having a first side (28) and an opposite second side (30),
- - said turntable (20) having a plurality of test tube holders (22), each configured for holding a test tube (5) in a centrifuging position,
- a first motor (M1) coupled to said turntable (20) for rotating said turntable (20) about said axis (A),
- a first test tube transfer mechanism (40) mounted at said first side (28) for rotation about said axis (A), for transferring a test tube (5) to a test tube holder (22) of said turntable (20),
- - said first test tube transfer mechanism (40) including a transferring holder (42) for receiving and temporarily supporting a test tube (5), and
- a second motor (M2) coupled to said first test tube transfer mechanism (40) and rotating said first test tube transfer mechanism (40) about said axis (A) during said transferring, **characterised in that** said transferring holder (42) is movable, and **in that** said transferring holder (42) is pivotable about an axis (B) oriented perpendicular to said axis (A) of rotation of said turntable (20).

2. The centrifuge according to claim 1, said test tubes (5) being oriented radially outwards from said axis (A) in said centrifuging position, perpendicular to said axis (A) or at angle (α) between 90° and 80° to said axis (A).

3. The centrifuge of claim 1 or 2, said turntable (20) having a plurality of groups of test tube holders (22), said groups being located at different radial distances from said axis (A).

4. The centrifuge according to any of the previous claims, comprising a drive (D) for moving said first test tube transfer mechanism (40) and/or said turntable (2) along said axis (A), for varying the distance along said axis (A) between said turntable (20) and said first test tube transfer mechanism (40).

5. The centrifuge according to the previous claim, said turntable (20) and said first test tube transfer mechanism (40) including respective bearings having complementary surface portions engaging each other when said drive (D) is engaged to couple said turntable (20) with said first test tube transfer mechanism (40).

6. The centrifuge according to any of the previous claims, comprising a second test tube transfer mechanism (60) located for transferring a test tube (5) to said first test tube transfer mechanism (40), in a non-rotating state of said first test tube transfer mechanism (40), for subsequent transfer of said test tube (5) to said test tube holder (22) of said turntable (20) by said first test tube transfer mechanism (40).

7. The centrifuge according to any of the previous claims, including a first ejector (44) for ejecting said test tube (5) supported by said transferring holder (42).

8. The centrifuge according to the previous claim, said first test tube transfer mechanism (40) including securing elements for temporarily securing said test tube (5) supported by said transferring holder (42), said first ejector (44) releasing said securing elements to eject said test tube (5) by gravity, such as securing elements being selected in the group of clamps and magnets.

9. The centrifuge according to any of the previous claims, including a second ejector (48) for ejecting a test tube (5) from a corresponding test tube holder (22) of said turntable (20), such as by a movable element (49).

10. The centrifuge according to the previous claim, said first test tube transfer mechanism (40) being configured for receiving and supporting said test tube (5) ejected by said second ejector (48).

11. The centrifuge according to claim 9 or 10, said second ejector (48) being operative to move said test tube (5) in a direction generally parallel with said axis (A).

12. The centrifuge according to the previous claim, said first test tube transfer mechanism (40) including said second ejector (48).

13. The centrifuge according to the previous claim, said second ejector (48) being movable between a position next to said turntable (20) and a position facing said second side (30).

14. The centrifuge according to any of the previous claims 1-6, including a gripper (802) being moveable in a moving direction (806) by a moving device (804), such as a linear actuator, so as to enable transfer of the test tube to and/or from the turntable (20) using the gripper and the moving device.

15. The centrifuge according to any of the previous claims, including a control device configured for positioning and maintaining said first test tube transfer mechanism (40) rotating about said axis (A) aligned with a predetermined test tube holder (22') of said turntable (20) simultaneously rotating about said axis (A), said control device being configured for activating said first test tube transfer mechanism (40) for transferring a test tube (5) supported by said first test tube transfer mechanism (40) to said predetermined test tube holder (22') of said turntable (20) after said positioning.

## Patentansprüche

1. Zentrifuge (1) zur Zentrifugation von Probenröhrchen (5), insbesondere zur Hochgeschwindigkeitszentrifugation von länglichen Probenröhrchen, die Proben enthalten, wobei die Zentrifuge Folgendes umfasst:
- einen Drehteller (20), der mittig zur Drehung um eine Achse (A) befestigt ist und eine erste Seite (28) und eine gegenüberliegende zweite Seite (30) aufweist,
- - wobei der Drehteller (20) eine Vielzahl von Probenröhrchenhaltern (22) aufweist, die jeweils zum Halten eines Probenröhrchen (5) in einer Zentrifugierposition konfiguriert sind,
- einen ersten Motor (M1), der mit dem Drehteller (20) gekoppelt ist, zum Drehen des Drehtellers (20) um die Achse (A),
- einen ersten Probenröhrchen-Übertragungsmechanismus (40), der an der ersten Seite (28) zur Drehung um die Achse (A) befestigt ist, zum Übertragen eines Probenröhrchen (5) an einen Probenröhrchenhalter (22) des Drehtellers (20),
- - wobei der erste Probenröhrchen-Übertragungsmechanismus (40) einen Übertragungshalter (42) zum Aufnehmen und vorübergehenden Tragen eines Probenröhrchens (5) beinhaltet, und
- einen zweiten Motor (M2), der mit dem ersten Probenröhrchen-Übertragungsmechanismus (40) gekoppelt ist und den ersten Probenröhrchen-Übertragungsmechanismus (40) während des Übertragens um die Achse (A) dreht, **dadurch gekennzeichnet, dass** der Übertragungshalter (42) beweglich ist und dass der Übertragungshalter (42) um eine Achse (B), die senkrecht zu der Achse (A) der Drehung des Drehtellers (20) ausgerichtet ist, schwenkbar ist.

2. Zentrifuge nach Anspruch 1, wobei die Probenröhrchen (5) von der Achse (A) in der Zentrifugierungsposition, senkrecht zu der Achse (A) oder in einem Winkel (α) zwischen 90° und 80° zu der Achse (A), radial nach außen ausgerichtet sind.

3. Zentrifuge nach Anspruch 1 oder 2, wobei der Drehteller (20) eine Vielzahl von Gruppen von Probenröhrchenhaltern (22) aufweist, wobei sich die Gruppen in unterschiedlichen radialen Abständen zu der Achse (A) befinden.

4. Zentrifuge nach einem der vorhergehenden Ansprüche, umfassend einen Antrieb (D) zum Bewegen der ersten Probenröhrchen-Übertragungsmechanismus (40) und/oder des Drehtellers (2) entlang der Achse (A) zum Variieren des Abstands entlang der Achse (A) zwischen dem Drehteller (20) und dem ersten Probenröhrchen-Übertragungsmechanismus (40).

5. Zentrifuge nach dem vorhergehenden Anspruch, wobei der Drehteller (20) und der erste Probenröhrchen-Übertragungsmechanismus (40) jeweilige Lager mit komplementären Oberflächenabschnitten aufweisen, die ineinander eingreifen, wenn der Antrieb (D) eingreift, um den Drehteller (20) mit dem ersten Probenröhrchen-Übertragungsmechanismus (40) zu koppeln.

6. Zentrifuge nach einem der vorhergehenden Ansprüche, umfassend einen zweiten Probenröhrchen-Übertragungsmechanismus (60), der zum Übertragen eines Probenröhrchen (5) an den ersten Probenröhrchen-Übertragungsmechanismus (40), in einen nichtdrehenden Zustand des ersten Probenröhrchen-Übertragungsmechanismus (40), zur nachfolgenden Übertragung des Probenröhrchens (5) an den Probenröhrchenhalter (22) des Drehtellers (20) durch den ersten Probenröhrchen-Übertragungsmechanismus (40) angeordnet ist.

7. Zentrifuge nach einem der vorhergehenden Ansprüche, beinhaltend eine erste Ausstoßvorrichtung (44) zum Ausstoßen des Probenröhrchens (5), das durch den Übertragungshalter (42) getragen wird.

8. Zentrifuge nach einem der vorhergehenden Ansprüche, wobei der erste Probenröhrchen-Übertragungsmechanismus (40) Sicherungselemente zum vorübergehenden Sichern des Probenröhrchens (5), das durch den Übertragungshalter (42) getragen wird, beinhaltet, wobei die erste Ausstoßvorrichtung (44) die Sicherungselemente freigibt, um das Probenröhrchen (5) durch Schwerkraft auszustoßen, wie etwa Sicherungselement, die aus der Gruppe bestehend aus Klemmen und Magneten ausgewählt sind.

9. Zentrifuge nach einem der vorhergehenden Ansprüche, beinhaltend eine zweite Ausstoßvorrichtung (48) zum Ausstoßen eines Probenröhrchens (5) aus einem entsprechenden Probenröhrchenhalter (22) des Drehtellers (20), wie etwa durch ein bewegliches Element (49).

10. Zentrifuge nach dem vorhergehenden Anspruch, wobei der erste Probenröhrchen-Übertragungsmechanismus (40) zum Aufnehmen und Tragen des Probenröhrchens (5), das durch die zweite Ausstoßvorrichtung (48) ausgestoßen wird, konfiguriert ist.

11. Zentrifuge nach Anspruch 9 oder 10, wobei die zweite Ausstoßvorrichtung (48) dazu betrieben werden kann, das Probenröhrchen (5) in einer Richtung im Allgemeinen parallel zu der Achse (A) zu bewegen.

12. Zentrifuge nach dem vorhergehenden Anspruch, wobei der erste Probenröhrchen-Übertragungsmechanismus (40) die zweite Ausstoßvorrichtung (48) beinhaltet.

13. Zentrifuge nach dem vorhergehenden Anspruch, wobei die zweite Ausstoßvorrichtung (48) zwischen einer Position neben dem Drehteller (20) und einer Position in Richtung der zweiten Seite (30) beweglich ist.

14. Zentrifuge nach einem der vorhergehenden Ansprüche 1-6, beinhaltend eine Greifvorrichtung (802), die in einer Bewegungsrichtung (806) durch eine Bewegungsvorrichtung (804), wie etwa ein Linearaktor, beweglich ist, um so eine Übertragung des Probenröhrchen an den und/oder von dem Drehteller (20) unter Verwendung der Greifvorrichtung und der Bewegungsvorrichtung zu ermöglichen.

15. Zentrifuge nach einem der vorhergehenden Ansprüche, beinhaltend eine Steuervorrichtung, die zum Positionieren und Beibehalten des ersten Probenröhrchen-Übertragungsmechanismus (40), der sich um die Achse (A) dreht, in einem ausgerichteten Zustand mit einem vorbestimmten Probenröhrchenhalter (22') des Drehtellers (20), der sich gleichzeitig um die Achse (A) dreht, konfiguriert ist, wobei die Steuervorrichtung zum Aktivieren des ersten Probenröhrchen-Übertragungsmechanismus (40) zum Übertragen eines Probenröhrchens (5), das durch den ersten Probenröhrchen-Übertragungsmechanismus (40) getragen wird, an den vorbestimmten Probenröhrchenhalter (22') des Drehtellers (20) nach dem Positionieren konfiguriert ist.

## Revendications

1. Centrifugeuse (1) permettant la centrifugation de tubes à essai (5), en particulier permettant la centrifugation à haute vitesse de tubes à essai allongés contenant des échantillons, ladite centrifugeuse comprenant :
- un plateau tournant (20) monté centralement pour la rotation autour d'un axe (A) et comportant un premier côté (28) et un second côté opposé (30),
- - ledit plateau tournant (20) comprenant une pluralité de supports de tube à essai (22), chacun étant conçu pour supporter un tube à essai (5) dans une position de centrifugation,
- un premier moteur (M1) couplé audit plateau tournant (20) pour faire tourner ledit plateau tournant (20) autour dudit axe (A),
- un premier mécanisme de transfert de tube à essai (40) monté au niveau du premier côté (28) pour la rotation autour dudit axe (A), pour transférer un tube à essai (5) sur un support de tube à essai (22) dudit plateau tournant (20),
- - ledit premier mécanisme de transfert de tube à essai (40) comprenant un support de transfert (42) pour recevoir et temporairement supporter un tube à essai (5), et
- un second moteur (M2) couplé audit premier mécanisme de transfert de tube à essai (40) et faisant tourner ledit premier mécanisme de transfert de tube à essai (40) autour dudit axe (A) pendant ledit transfert, **caractérisé en ce que** ledit support de transfert (42) est mobile, et **en ce que** ledit support de transfert (42) peut pivoter autour d'un axe (B) orienté perpendiculairement à l'axe (A) de rotation dudit plateau tournant (20).

2. Centrifugeuse selon la revendication 1, lesdits tubes à essai (5) étant orientés radialement vers l'extérieur par rapport audit axe (A) dans ladite position de centrifugation, perpendiculairement audit axe (A) ou suivant un angle (α) compris entre 90° et 80° par rapport audit axe (A).

3. Centrifugeuse selon la revendication 1 ou 2, ledit plateau tournant (20) comportant une pluralité de groupes de supports de tube à essai (22), lesdits groupes étant situés à différentes distances radiales dudit axe (A).

4. Centrifugeuse selon l'une quelconque des revendications précédentes, comprenant un entraînement (D) pour déplacer ledit premier mécanisme de transfert de tube à essai (40) et/ou ledit plateau tournant (2) le long dudit axe (A), pour faire varier la distance le long dudit axe (A) entre ledit plateau tournant (20) et ledit premier mécanisme de transfert de tube à essai (40).

5. Centrifugeuse selon la revendication précédente, ledit plateau tournant (20) et ledit premier mécanisme de transfert de tube à essai (40) comprenant des paliers respectifs comportant des parties de surface complémentaires venant au contact l'une de l'autre lorsque ledit entraînement (D) est mis en prise pour coupler ledit plateau tournant (20) audit premier mécanisme de transfert de tube à essai (40).

6. Centrifugeuse selon l'une quelconque des revendications précédentes, comprenant un second mécanisme de transfert de tube à essai (60) situé pour transférer un tube à essai (5) sur ledit premier mécanisme de transfert de tube à essai (40), dans un état non rotatif dudit premier mécanisme de transfert de tube à essai (40), pour le transfert ultérieur dudit tube à essai (5) sur ledit support de tube à essai (22) dudit plateau tournant (20) par ledit premier mécanisme de transfert de tube à essai (40).

7. Centrifugeuse selon l'une quelconque des revendications précédentes, comprenant un premier éjecteur (44) pour éjecter ledit tube à essai (5) supporté par ledit support de transfert (42).

8. Centrifugeuse selon la revendication précédente, ledit premier mécanisme de transfert de tube à essai (40) comprenant des éléments de fixation pour fixer temporairement ledit tube à essai (5) supporté par ledit support de transfert (42), ledit premier éjecteur (44) relâchant lesdits éléments de fixation pour éjecter ledit tube à essai (5) par gravité, ces éléments de fixation étant choisis dans le groupe des pinces et des aimants.

9. Centrifugeuse selon l'une quelconque des revendications précédentes, comprenant un second éjecteur (48) pour éjecter un tube à essai (5) d'un support de tube à essai correspondant (22) dudit plateau tournant (20), tel que par un élément mobile (49).

10. Centrifugeuse selon la revendication précédente, ledit premier mécanisme de transfert de tube à essai (40) étant conçu pour recevoir et supporter ledit tube à essai (5) éjecté par ledit second éjecteur (48).

11. Centrifugeuse selon la revendication 9 ou 10, ledit second éjecteur (48) étant utilisable pour déplacer ledit tube à essai (5) dans une direction généralement parallèle audit axe (A).

12. Centrifugeuse selon la revendication précédente, ledit premier mécanisme de transfert de tube à essai (40) comprenant ledit second éjecteur (48).

13. Centrifugeuse selon la revendication précédente, ledit second éjecteur (48) étant mobile entre une position à côté dudit plateau tournant (20) et une position faisant face audit second côté (30).

14. Centrifugeuse selon l'une quelconque des revendications précédentes 1 à 6, comprenant un préhenseur (802) pouvant être déplacé dans une direction de déplacement (806) par un dispositif de déplacement (804), tel qu'un actionneur linéaire, de façon à permettre le transfert du tube à essai sur et/ou depuis le plateau tournant (20) à l'aide du préhenseur et du dispositif de déplacement.

15. Centrifugeuse selon l'une quelconque des revendications précédentes ; comprenant un dispositif de commande conçu pour positionner et maintenir ledit premier mécanisme de transfert de tube à essai (40) en rotation autour de l'axe (A) aligné avec un support de tube à essai prédéterminé (22') dudit plateau tournant (20) en rotation simultanée autour dudit axe (A), ledit dispositif de commande étant conçu pour actionner ledit premier mécanisme de transfert de tube à essai (40) pour transférer un tube à essai (5) supporté par ledit premier mécanisme de transfert de tube à essai (40) sur ledit support de tube à essai prédéterminé (22') dudit plateau tournant (20) après ledit positionnement.
